# EUROPEAN PATENT APPLICATION

(11) **EP 2 020 634 A1**
(43) Date of publication of application: **04.02.2009**
(21) Application number: 07120701.3
(22) Date of filing: 14.11.2007
(51) Int. Cl.: G06F 3/048, G06Q 30/00

(54) **User interface for a context-aware leisure-activity recommendation system**

(30) Priority: 31.07.2007 US 831692
(71) Applicant: Palo Alto Research Institute Incorporated, Palo Alto, CA 94304 (US)
(72) Inventor: Newman, Mark W, Ann Arbor, CA 48104 (US); Bellotti, Victoria M, San Francisco, CA 94110 (US); Walendowski, Alan, Watsonville, CA 95076 (US); Begole, James, San Jose, CA 95129 (US)
(74) Representative: Skone James, Robert Edmund

(57) **Abstract**

One embodiment of the present invention provides a system that provides a user interface for a context-aware recommendation system which can be operated with one hand. The user interface includes a touch-screen display (1402) and a list of recommendations (114) presented on the touch-screen display. The user interface further includes a plurality of graphic elements (102-112) presented on the touch-screen display which allow a user to configure preferences associated with the activities. A layout of the leisure activities and the graphic elements allows the user to hold the touch-screen display and perform operations on the leisure activities and/or the graphic elements with one hand.

## Description

The present disclosure relates to computer user interfaces. More specifically, the present disclosure relates to user interface for a context-aware leisure-activity recommendation system that can be operated with one hand.

Recent developments of mobile computing technologies have allowed unprecedented integration of various functions into a single hand-held device. For example, a smart phone can provide voice communication, Internet access, audio/video entertainment, gaming, and global positioning information to a user. Furthermore, new display technologies have enabled larger, brighter, and higher-resolution displays with more sensitive and precise touch-screen capabilities. These technological advances, coupled with faster mobile processors and cheaper, larger memories, can now provide a platform for new applications that have not been possible in the past.

However, most existing hand-held devices only provide basic networking functions, such as browsing the Internet. Applications for different communication capabilities, such as global positioning system (GPS), Internet, and directory services, are often separate from one another. Furthermore, current user interfaces are not designed to take advantages of the latest display technologies and to facilitate seamless integration of applications across different communication regimes.

One embodiment of the present invention provides a system that facilitates a user interface for a context-aware recommendation system which can be operated with one hand. The user interface includes a touch-screen display and a list of recommendations presented on the touch-screen display. The user interface further includes a plurality of graphic elements presented on the touch-screen display which allow a user to configure preferences associated with the recommendations. A layout of the leisure activities and the graphic elements allows the user to hold the touch-screen display and perform operations on the leisure activities and/or the graphic elements with one hand.

In a variation on this embodiment, the user interface allows a user to select and view details of a recommendation by tapping on the activity.

The user interface is conveniently a portable, handheld device.

In a variation on this embodiment, the user interface presents a marking menu for the selected leisure activity after the user taps the recommendation.

In a variation on this embodiment, after the user selects to view a recommendation in detail, the user interface presents a rating for the recommendation and allows the user to rate the leisure activity.

In a variation on this embodiment, the user interface allows the user to rate the recommendation by touching and sliding over a graphic element that represents the rating of the recommendation.

In a variation on this embodiment, after the user selects to view a recommendation in detail, the user interface allows the user to view and enter comments for the recommendation.

In a variation on this embodiment, the recommendations include recommendations for leisure activities. Additionally, the preferences associated with the recommendations include at least one of: activity preferences, location preference, and time preferences.

In a further variation, to allow the user to configure activity preferences, after the user taps on a graphic element corresponding to activity preferences, the user interface presents a sub-menu which allows the user to set the type of activity and preferences associated with the type of activity.

In a further variation, to allow the user to configure location preferences, after the user taps on a graphic element corresponding to location preferences, the user interface presents a sub-menu which allows the user to configure the location preference based on at lease one of: an address, a point of interest, a current location of the user, and a radius from a given location or a current location.

In a further variation, the user interface allows the user to save the current location based on information received from a global positioning system (GPS) into a list. The user can access the list and select saved locations to configure the system to use that location when making recommendations.

In a further variation, to allow the user to configure time preferences, after the user taps on a graphic element corresponding to time preferences, the user interface presents a sub-menu which allows the user to set at least one of: a time, a date, and a month, during which time the leisure activities can be performed.

In a variation on this embodiment, the size of a graphic element is approximately equal to the footprint of a thumb on the touch-screen display.

In a further variation, the graphic element has an approximate diameter of 9.2 mm.

Some examples of systems according to the present invention will now be described with reference to the accompanying drawings, in which:-

FIG. 1 presents an exemplary root menu displayed on a user interface for a context-aware leisure-activity recommendation system in accordance with one embodiment of the present invention.

FIG. 2 presents an exemplary marking menu after a user presses on a recommended activity in accordance with one embodiment of the present invention.

FIG. 3 presents an exemplary sub-menu which displays details of a recommended leisure activity and allows the user to view and enter ratings for this activity in accordance with one embodiment of the present invention.

FIG. 4 presents an exemplary marking menu that allows the user to configure activity preferences in accordance with one embodiment of the present invention.

FIG. 5 presents an exemplary sub-menu which allows the user to change activity in accordance with one embodiment of the present invention.

FIG. 6 presents an exemplary sub-menu which allows the user to change preferences of a selected activity type in accordance with one embodiment of the present invention.

FIG. 7 presents an exemplary marking menu which allows the user to set preferences for different cuisine types for activity type "eat" in accordance with one embodiment of the present invention.

FIG. 8 presents an exemplary sub-menu which displays cuisine preferences for different cuisine types in accordance with one embodiment of the present invention.

FIG. 9 presents an exemplary marking menu which allows the user to increase or decreases the preference setting for a type of cuisine in accordance with one embodiment of the present invention.

FIG. 10 presents an exemplary sub-menu which allows the user to input the location information for the leisure activities in accordance with one embodiment of the present invention.

FIG. 11 presents an exemplary sub-menu which allows the user to select from a list of locations for the leisure activities in accordance with one embodiment of the present invention.

FIG. 12 presents an exemplary sub-menu which allows the user to set the time and date for the leisure activities in accordance with one embodiment of the present invention.

FIG. 13 presents an exemplary state-diagram of the operation of the user interface in accordance with one embodiment of the present invention.

FIG. 14 illustrates an exemplary computer system with a one-hand-operation user interface for a leisure-activity recommendation system in accordance with one embodiment of the present invention.

Embodiments of the present system provide a user interface for a context-aware recommendation system. Particularly, this user interface can be displayed on a hand-held mobile computing system and allow a user to operate the recommendation system with one hand. In addition, the user can operate the recommendation system with one finger, preferably the thumb, of the holding hand.

The context-aware recommendation system provides pieces of information associated with a plurality of factors such as the user's physical situation, other people who are with the user, the user's past behavior, and/or the user's stated interests. Other factors may also be used in the recommendation system.

A context-aware system differs from a search system in that at least one factor in the calculation is not explicitly entered by the user. The recommendations are presented according to the system's prediction of how likely each item is to be useful to the user. In this disclosure, the recommendation of information related to an activity is referred to as an "activity recommendation."

One embodiment of the present invention provides a context-aware leisure-activity recommendation system that can be operated with one hand. The underlying context-aware leisure-activity recommendation system is a system that combines contextual information, such as a user's current activity, location, and time, to recommend leisure activities to the user. This system also allows the user to set preferences of leisure activities, so that the recommended activities can better match the user's needs.

In one embodiment, the recommendations are provided on a mobile device, and the user can use the same mobile device to interact with and change the lists of recommendations. For example, the user can scroll through a list of recommendations that is larger than can be presented on the screen at once, request a new set of recommendations that are similar to the recommendations provided, and view additional details for any of the recommended activities. In addition, the user can manually override any of the current contextual information to receive recommendations based on a context that may not be currently observable, such as the context represented by being in a different place, at a different time, or being engaged in a different activity.

Embodiments of the present inventive user interface can be implemented on a touch-screen display. The graphic elements representing menu items, such as buttons, are of sizes suitable for tapping by a finger, preferably by a thumb. In some embodiments, all of these features can be accessed via graphic control elements, such as buttons, that are optimized for operation with the thumb. In one embodiment, the graphic elements accessible for user control have an approximate diameter of at least 9.2 mm in their smallest dimension. Note that this diameter size is not required for embodiments of the present invention to operate. Some of the controls can be smaller than 9.2 mm across.

In further embodiments, the application makes several operations available through marking menus. A marking menu on a touch-screen display works as follows. A user taps or presses down on the screen with a finger or stylus and waits for a short period, such as 1/3 second (this operation is referred to as "press-and-wait"). A radial menu then appears under the tip of the finger or stylus. A radial menu typically includes a circle divided into a number of slices. Each slice is associated with one menu item. The user then selects an item by keeping the finger or stylus pressed and making a stroke in the direction that corresponds to the slice associated with the desired item. The alternate way of selecting an item is by drawing a mark without display of the radial menu and the press-and-wait process, which relies on the user recalling the location and/or direction of the item in the menu. A mark is drawn by pressing the finger or stylus down and immediately moving in the direction of the desired menu item. A mark can combine multiple strokes in different directions.

Marking menus are advantageous because they do not take up space on the interface when not in use (and, given the requirements that control targets be relatively large in size, space is even more valuable than it is for typical mobile interfaces). Additionally, they can be an efficient means of accessing a large number of control options with simple gestures, and thus are well adapted to use with a thumb.

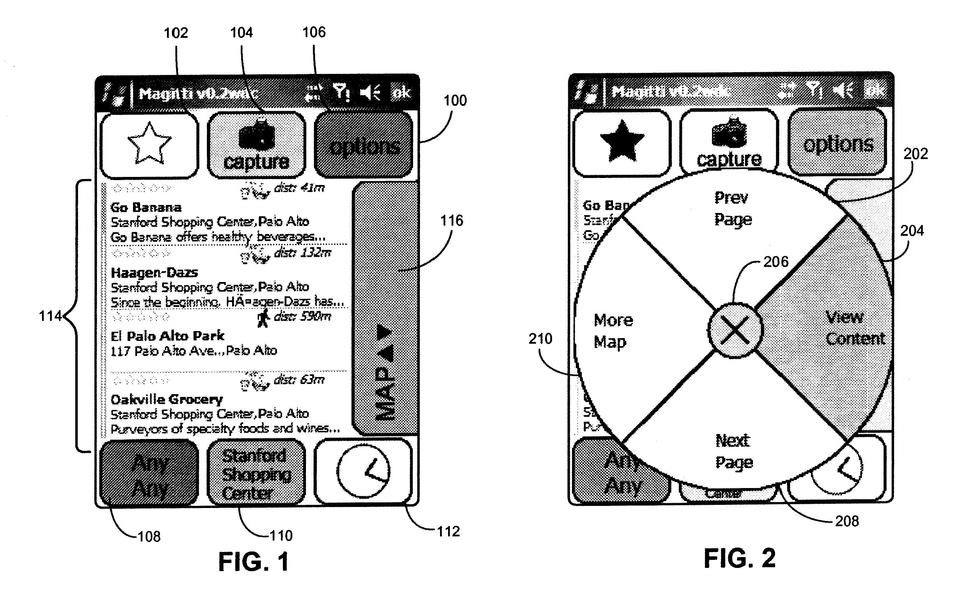

FIG. 1 presents an exemplary root menu displayed on a user interface for a context-aware leisure-activity recommendation system in accordance with one embodiment of the present invention. In one embodiment, root menu 100 displays a refresh button 102, a "capture" button 104, an "options" button 106, an activity-configuration button 108, a location-configuration button 110, a time-configuration button 112, a map tap 116, and a list of recommended activities 114.

By tapping refresh button 102, the user can refresh activity list 114 with the current or specified contextual information. Activity list 114 presents a list of activities that one can do at a particular location, at a particular time, and which meet with certain preferences set by the user. For example, activity list 114 can display only restaurants near a certain location, if the user specifies the activity type to "eat." Other activity types include "drink," which can result in bars, etc., "see," which can result in movies, operas, concerts, etc., "do," which can result in parks, museums, exhibitions, etc., or "any," which can result in any type of activity. Other categories of activities are also possible.

"Capture" button 104 allows the user to capture the identity of a piece of information. The capture function may be accomplished by using a variety of mechanisms, such as optical bar-code reading, radio-frequency identifier (RFID) reading, or other technologies that can capture an identifier. The user can further save the list and/or forward the list to another user. "Options" button 106 allows the user to perform additional operations to the current list of recommended activities. For example, the user can display saved recommendations, view previously viewed recommendations, or search from a list of activities.

In one embodiment, root menu 100 also includes a map tap 116. When a user taps on map tap 116, root menu 100 can display a map showing the user's current location. This operation can be performed based on information provided by a global positioning system (GPS) which resides on the same handheld device. In one embodiment, the system can use the GPS information to select activities in the vicinity of the user's current location.

On the bottom of root menu 100 are activity-configuration button 108, location-configuration button 110, and time-configuration button 112. The user can use activity-configuration button 108 to set activity type and further configure specific preferences for a given type of activity. For example, if the user specifies the activity type to be "eat," he can further specify his preferences for different types of cuisines, such as Thai, Italian, American, etc. Location-configuration button 110 allows the user to set a location for the activities. The user can enter a street address, a point of interest, a zip code, or use the current location which is provided by the GPS on the same hand-held device. Time-configuration button 112 allows the user to set a specific time for the activities. This time can be in the future or the current time. Presumably, the hand-held device maintains a clock that tracks the current time.

Due to the limited display space, root menu 100 typically cannot afford to display full details of every recommended activity. In one embodiment, the present inventive user interface uses marking menus to allow a user to expand a respective activity and view its details.

FIG. 2 presents an exemplary marking menu displayed after a user presses on a recommended leisure activity in accordance with one embodiment of the present invention. In this example, when a user presses on a particular activity, the user interface displays a marking menu. The marking menu is a radial menu with four menu items (slices): a "previous page" item 202, a "view content" item 204, a "next page" 208, and a "more map" item 210. When the user draws a stroke in the direction of "previous page" item 202, the user interface scrolls up the activity list and displays the previous page of the list. In other words, "previous page" item 202 resembles the "page up" key on a conventional keyboard. Correspondingly, by drawing a stroke in the direction of "next page" item 208, the user can view the next page of the activity list. That is, "next page" item 208 resembles the "page down" key on a conventional keyboard.

"View content" item 204 allows the user to view the content of the activity on which the user presses. By drawing a stroke in the direction of "view content" item 204, the user can view the details of the activity.

"More map" item 210 allows the user to view a map that shows the location of the activity on which the user presses.

In one embodiment, at the center of the radial menu is a "close" button 206. When the user taps "close" button 206, the marking menu closes and the user interface reverts to the previous view, which in this case is the list of recommended activities.

Note that the marking menu does not require the display of the radial menu. The user can simply draw a stroke in a particular direction to invoke the corresponding function without the press-and-wait process. For example, the user can use his thumb to directly draw an upward stroke on the activity list to view the previous page, or draw a downward stroke to view the next page. The user can also draw a stroke to the right to directly access the activity details, or a stroke to the left to view the location of the activity on a map.

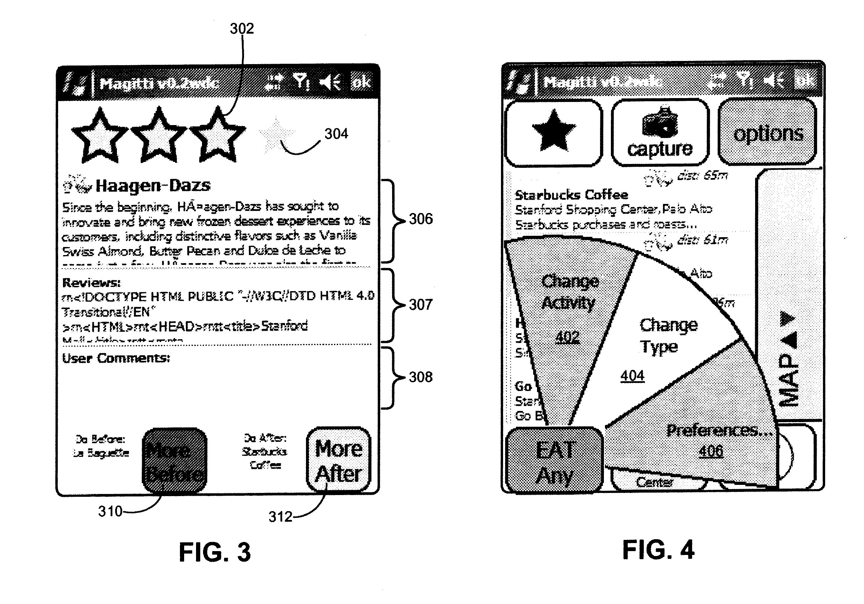

After the user chooses to view the detailed contents of an activity, the user interface displays a sub-menu with the activity details. FIG. 3 presents an exemplary sub-menu which displays details of a recommended leisure activity and allows the user to view and enter ratings for this activity in accordance with one embodiment of the present invention. In this example, the sub-menu displays the activity details 306, reviews 307, and user comments 308. In addition, the sub-menu shows a user rating indicator 304 for the activity and provides a sliding mechanism 302 which allows the user to enter his rating.

In one embodiment, activity details 306 can include information on the venue and/or the activity, the location, directions, business hours, and/or prices. Other information can also be displayed. Note that when the entire activity content cannot be displayed at once in the limited space, the user interface can use a marking menu to allow the user to scroll up or down to view more details.

Reviews 307 present one or more reviews for the activity. Such reviews may be published by third parties. User comments 308 allow the user to view comments entered by other users about the activity or the venue. In one embodiment, the user interface can further allow a user to enter his comments by using a marking menu. For example, the user can press on the user comments region 308. The subsequently displayed marking menu can provide an "enter comments" item, which upon the user's selection leads to a sub-menu where the user can enter his comments.

On the top of the user interface is a user rating indicator 304. In one embodiment, the user rating is represented as a number of solid-colored stars. In addition, the user interface provides a sliding mechanism 302 that allows the user to enter his rating of the activity. In this example, the user's own rating is represented by empty stars with a solid-colored border. This way, the user can distinguish the average rating and his own rating for the activity. Further more, the user can enter his rating by pressing and sliding his thumb or a stylus over the solid-colored stars. The user can also increase his ratings by drawing a stroke to the right, or decrease his rating by drawing a stroke to the left.

The user interface further displays a "more before" button 310 and a "more after" button 312. "More before" button 310 allows the user to browse to the details of information recommended for activities that may precede the recommended activity. Similarly, "more after" button 312 allows the user to browse to the details of information recommended for an activity that may occur subsequent to the recommended activity on the activity list.

In one embodiment, the user interface allows the user to configure contextual properties based on which the system recommends activities. In one embodiment, the user interface provides a graphic control element that allows the user to configure activity preferences.

FIG. 4 presents an exemplary marking menu that allows the user to configure activity preferences in accordance with one embodiment of the present invention. In this example, after the user taps on an activity-configuration button 401, the user interface displays a marking menu which presents three items: a "change activity" item 402, a "change type" item 404, and a "preference" item 406. Change activity item 402 allows the user to change the activity he would like to engage in. For example, the user can set the activity to "eat," "drink," or "do."

"Change type" item 404 allows the user to optionally set subcategories or sub-types of a chosen activity. For example, after the user has set the activity to "eat," the user can further set the sub-category to "breakfast" or "lunch" through "change type" item 404, so that the user interface only displays restaurant that serves breakfast or lunch.

"Preference" item 406 allows the user to further configure the preferences associated with the selected type of activities. For example, if the user selects "eat" as the activity category, "preference" item 406 allows the user to set the type of cuisine, price range, reservation availability, and/or parking availability. Other activity preferences are also possible.

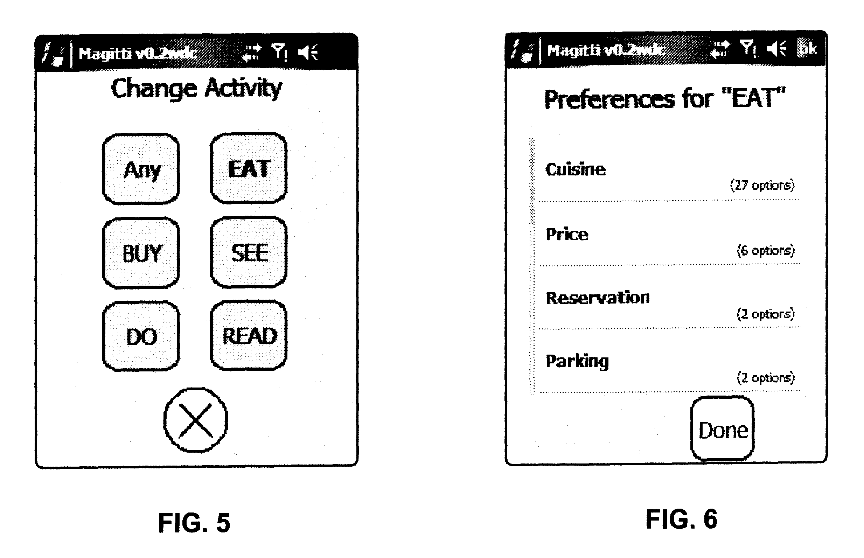

After the user selects "change activity" item 402, the user interface displays a sub-menu which allows the user to select from a list of activities. FIG. 5 presents an exemplary sub-menu which allows the user to change activity in accordance with one embodiment of the present invention. In this example, the sub-menu presents five specific activities to the user, namely "eat," "buy," "see," "do," and "read." Further more, this sub-menu also provides an "any" button which is a catch-all option. If the user selects "any," the system can recommend any type of activity to the user based on the specified location and time.

When the user selects "preference" item 406, the user interface displays a sub-menu which allows the user to configure activity preferences. FIG. 6 presents an exemplary sub-menu which allows the user to change preferences of a selected activity type in accordance with one embodiment of the present invention. In this example, presumably the user has selected the "eat" activity category. The sub-menu allows the user to configure a number of preferences, such as cuisine type, price range, reservation availability, parking availability, and others. If the list of preferences is longer than can be displayed on one page, the user interface can provide a marking menu that allows the user to scroll up and down to view additional preference choices.

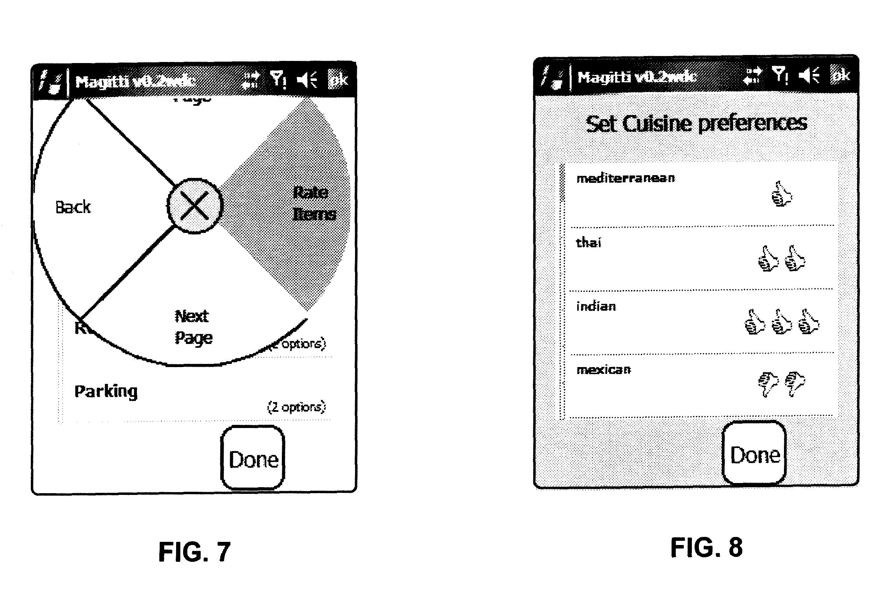

The user can also use the marking menu to access detailed options of a respective preference choice. For example, the user can press on "cuisine," which causes the user interface to display a marking menu as is illustrated in FIG. 7. The user can further selects "rate items" from the marking menu, which allows the user to further set preferences for different types of cuisines.

FIG. 8 presents an exemplary sub-menu which displays cuisine preferences for different cuisine types in accordance with one embodiment of the present invention. In this example, the sub-menu shows a list of different cuisine types and their corresponding preference settings. In one embodiment, the sub-menu represents the preference setting for each cuisine type as a number of "thumbs up" or "thumbs down." The user can change a preference setting for a cuisine type by pressing on that cuisine type, which causes the user interface to display a marking menu. The user can then draw an upward stroke to increase the number of "thumbs up" or decrease the number of "thumbs down" for that cuisine type. The user can also draw a downward stroke to decrease the number of "thumbs up" or increase the number of "thumbs down."

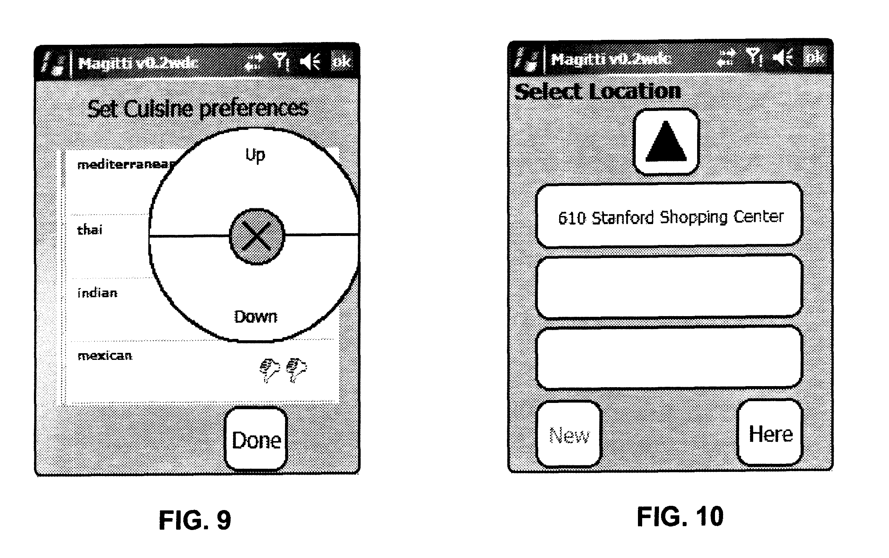

Embodiments of the present inventive user interface also allow the user to change location and time preferences for the activities. FIG. 10 presents an exemplary sub-menu which allows the user to input the location information for the leisure activities in accordance with one embodiment of the present invention. The sub-menu contains a number of location fields showing addresses and/or description of points of interest. The user can tap on a field to select the corresponding location. The user can also tap the "new" button on the lower left corner to enter a new address in one of the blank fields. Furthermore, the user can set the current location as the preferred location by tapping the "here" button. In one embodiment, the system obtains the current location information from the GPS application running on the same hand-held device. The up-arrow button on the top of the screen allows the user to scroll up on the list of locations.

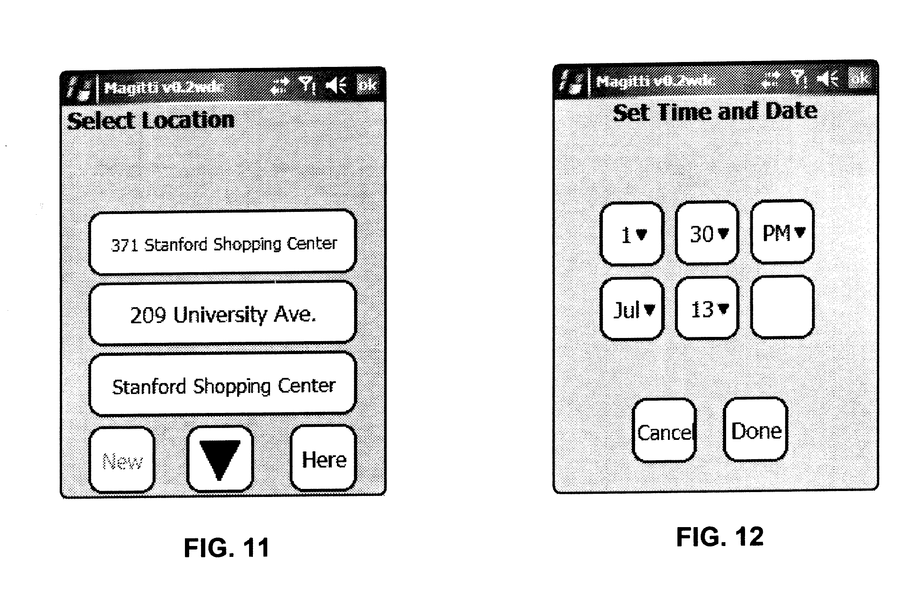

FIG. 11 presents an exemplary sub-menu which allows the user to select from a list of locations for the leisure activities in accordance with one embodiment of the present invention. In this example, the sub-menu displays a populated list of locations. The displayed locations can have different levels of specificity. For example, the location can be a street address, a landmark, or a point of interest. In further embodiments, the sub-menu can also allow the user to specify a radius from a particular location, which specifies a region where the user prefers the activities to occur.

The system can further allow the user to configure the activity time by tapping the time-configuration button 112. FIG. 12 presents an exemplary sub-menu which allows the user to set the time and date for the leisure activities in accordance with one embodiment of the present invention. In one embodiment, the sub-menu displays separate buttons for hour, minute, am/pm, month, and date. The sub-menu can also provide marking menus for the user to change the values of each field. For example, the user can draw an upward stroke from the hour button to increase the hour value, and draw a downward stroke from the minute button to decrease the minute value.

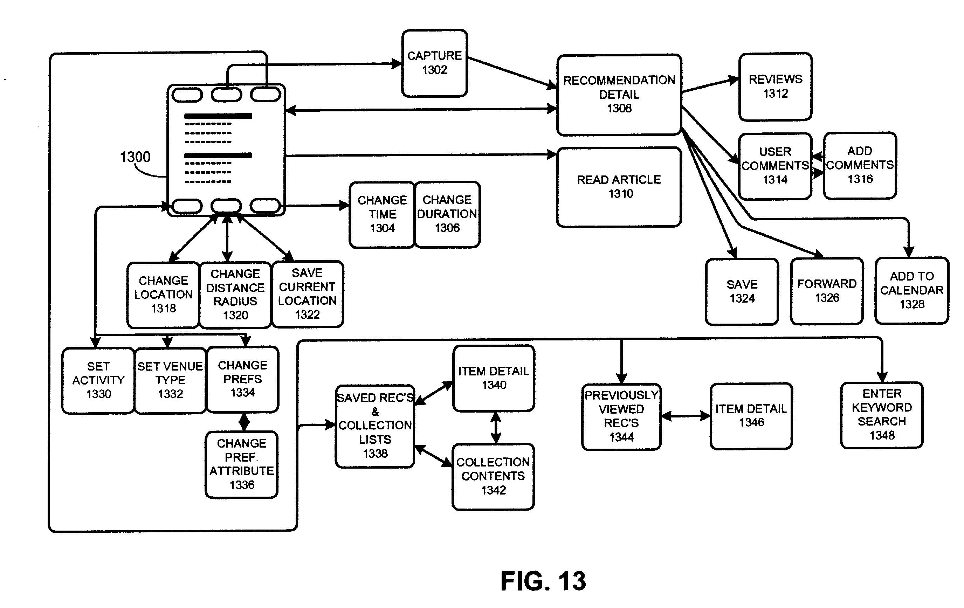

As described above, embodiments of the present inventive user interface can provide a wide range of flexibility for the user to configure different contextual properties. FIG. 13 presents an exemplary state-diagram of the operation of the user interface in accordance with one embodiment of the present invention.

In general, a root menu 1300 displays a list of activities and six buttons, three on the top and three on the bottom. The top-left button is a "refresh" button that allows the user to refresh the activity list based on the current contextual-property settings. The top-center button is a "capture" button that allows the user to capture a physical identifier associated with a specific piece of information, such as a URL, a document identifier, etc. (sub-menu 1302). The top-right button is an "options" button. The lower left button is an activity-configuration button. The lower center button is a location-configuration button. The lower right button is a time-configuration button.

When the user taps on the activity list to activate the corresponding marking menu, the user interface displays recommendation details (sub-menu 1308). Recommendation-detail sub-menu can also display reviews 1312 and user comments 1314. The field containing user comments 1314 can also allow the user to add comments 1316.

In one embodiment, the recommendation-detail sub-menu 1308 also provides options for the user to save the activity (menu item 1324), to forward the activity to another user (menu item 1326), and to add the activity to a calendar (menu item 1328).

By tapping on the activity list, a user can also read an article associated with the chosen activity on a sub-menu 1310.

When the user taps the options button on the upper right corner of root menu 1300, the user interface displays three menu items: a "saved records and collection lists" item 1338, a "previously viewed records" item 1344, and n "enter keyword search item" 1348.

"Saved records and collection lists" item 1338 allows the user to view details of a saved activity item (sub-menu 1340) and to view contents of a collection, such as a number of save activities (sub-menu 1342).

"Previously viewed records" item 1344 allows the user to view details of a previously viewed activity item (sub-menu 1346).

"Enter keyword search" item 1348 allows the user to search the activity list with a keyword.

When the user taps the activity-preference button on the lower left corner of root menu 1300, the user interface displays a marking menu containing a "set activity" item 1330, "set venue type" item 1332, and "change preferences" item 1334. "Set activity" item 1330 allows the user to set the activity, such as "eat," "do," or "see." "Set venue type" item 1332 allows the user to set the type of venue associated with the selected activity. "Change preferences" item 1334 allows the user to configure preferences for the selected activity, and can further include a sub-menu 1336 which allows the user to change preference attributes.

When the user taps the location-configuration button (lower center) on root menu 1300, the user interface displays a change-location sub-menu 1318. In addition, the user interface can allow the user to change the distance radius from a selected location (menu item 1320), and save the current location (menu item 1322).

When the user taps the time-configuration button (lower right) on root menu 1300, the user interface provides a change-time sub-menu (1304) which allows the user to specify a date and/or time. In addition, the user interface can allow the user to change the time duration during which the activities can occur (menu item 1306).

Note that the aforementioned state diagram is only one embodiment of the present invention. Other configurations and menu options are also possible.

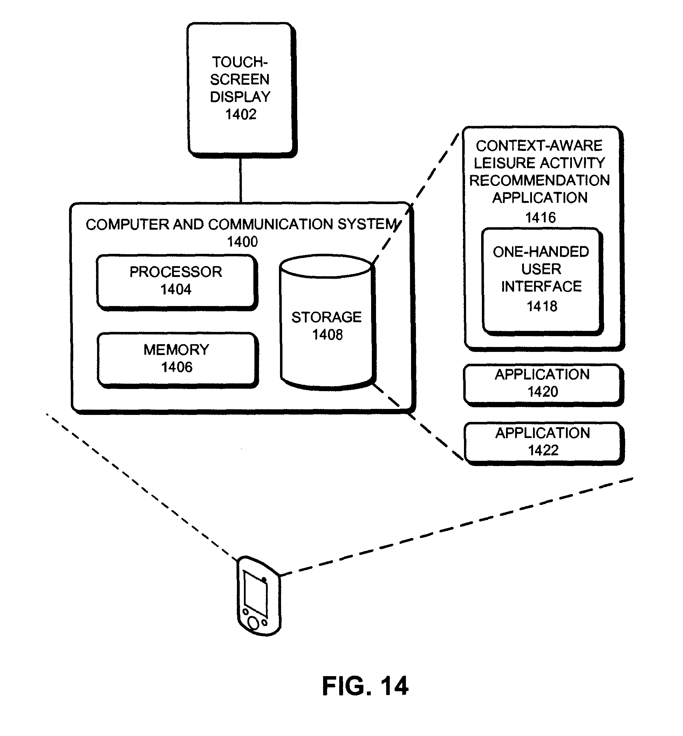

FIG. 14 illustrates an exemplary computer system with a one-hand-operation user interface for a leisure-activity recommendation system in accordance with one embodiment of the present invention. In one embodiment, a computer and communication system 1400 is coupled to a touch-screen display 1402, which serves as both the input and output device. Computer and communication system 1400 includes a processor 1404, a memory 1406, and a storage device 1408.

Storage device 1408 stores a context-aware leisure-activity recommendation application 1416, as well as other applications, such as applications 1420 and 1422. In one embodiment, context-aware leisure-activity recommendation application 1416 further includes a program that facilitates a user interface 1418 which supports a one-hand operation and allows the user to operate computer and communication system 1400 with one finger, preferably the thumb.

During operation, context-aware leisure-activity recommendation application 1416 is loaded from storage device 1408 into memory 1406 and then executed by processor 1404. While executing the program, processor 1404 performs the aforementioned functions.

## Claims

1. A computer system facilitating a user interface for a context-aware recommendation system which can be operated with one hand, the computer system comprising:
a processor;
a memory;
a touch-screen display displaying the user interface;
a list of recommendations presented on the touch-screen display; and
a plurality of graphic elements presented on the touch-screen display which allows a user to configure preferences associated with the recommendations;
wherein the layout of the recommendations and the graphic elements allow the user to hold the touch-screen display and perform operations on the recommendations and/or the graphic elements with one hand.

2. The computer system of claim 1, wherein the user interface is configured to allow a user to select and view details of a recommendation by tapping on the activity.

3. The computer system of claim 2, wherein the user interface is configured to present a marking menu for the selected recommendation after the user taps the recommendation.

4. The computer system of any of the preceding claims, wherein after the user selects to view a recommendation in detail, the user interface is further configured to present a rating for the recommendation and allow the user to rate the recommendation.

5. The computer system of any of the preceding claims wherein the user interface is configured to allow the user to rate the recommendation by touching and sliding over a graphic element that represents the rating of the recommendation.

6. The computer system of any of the preceding claims, wherein after the user selects to view a leisure activity in detail, the user interface is further configured to allow the user to view and enter comments for the leisure activity.

7. The computer system of any of the preceding claims, wherein the recommendations include recommendations for leisure activities; and
wherein the preferences associated with the recommendations include at least one of: activity preferences, location preferences, and time preferences.

8. The computer system of claim 7, wherein to allow the user to configure activity preferences, after the user taps on a graphic element corresponding to activity preferences, the user interface is further configured to present a sub-menu which allows the user to set the type of activity and preferences associated with the type of activity.

9. The computer system of claim 7 or claim 8, wherein to allow the user to configure location preferences, after the user taps on a graphic element corresponding to location preferences, the user interface is further configured to present a sub-menu which allows the user to configure the location preference based on at lease one of:
an address,
a point of interest,
a current location of the user, and
a radius from a given location or a current location.

10. The computer system of claim 9, wherein the user interface is configured to allow the user to configure the current location based on information received from a global positioning system (GPS).

11. The computer system of any of claims 7 to 10, wherein to allow the user to configure time preferences, after the user taps on a graphic element corresponding to time preferences, the user interface is further configured to present a sub-menu which allows the user to set at least one of:
a time,
a date, and
a month,
during which time the leisure activities can be performed.

12. The computer system of any of the preceding claims, wherein the size of a graphic element is approximately equal to the footprint of a thumb on the touch-screen display.

13. The computer system of claim 12,wherein the graphic element has an approximate diameter of 9.2 mm.

14. A system according to any of the preceding claims, wherein the system is portable and adapted to be handheld.

15. A user interface for a context-aware recommendation system which can be operated with one hand, the user interface comprising:
a touch-screen display;
a list of recommendations presented on the touch-screen display; and
a plurality of graphic elements presented on the touch-screen display which allow a user to configure preferences associated with the recommendations;
wherein a layout of the recommendations and the graphic elements allows the user to hold the touch-screen display and perform operations on the recommendations and/or the graphic elements with one hand.

16. A computer-readable storage medium storing instructions which when executed by a computer cause the computer to produce a user interface for a context-aware recommendation system which can be operated with one hand, the user interface comprising:
a touch-screen display;
a list of recommendations presented on the touch-screen display; and
a plurality of graphic elements presented on the touch-screen display which allow a user to configure preferences associated with the recommendations;
wherein a layout of the recommendations and the graphic elements allows the user to hold the touch-screen display and perform operations on the recommendations and/or the graphic elements with one hand.
